# EUROPEAN PATENT APPLICATION

(11) **EP 3 383 024 A1**
(43) Date of publication of application: **03.10.2018**
(21) Application number: 17163373.8
(22) Date of filing: 28.03.2017
(51) Int. Cl.: H04N 5/265, H04N 5/268, G06F 3/023, H04H 60/04

(54) **MODULAR CONTROL PANEL FOR CONTROLLING A VIDEO/AUDIO PROCESSING APPARATUS AND MODULAR CONTROL COMPONENT**

(71) Applicant: EVS Broadcast Equipment SA, 4102 Seraing (BE)
(72) Inventor: Vounckx, Johan, 3210 Linden (BE); Blavier, Marc, 4920 Aywaille (BE); Vafidis, Rachelle, 5080 Warisoulx (BE)
(74) Representative: Rossmanith, Manfred

(57) **Abstract**

A control panel for controlling a video/audio processing apparatus is suggested. The control panel comprises a set of modular control components (203) detachably mounted in a housing (202) of the control panel (201). Each modular control component (203) comprises at least one control element button (206), T-bar (207), jog dial (208), and touch screen. The control element receives a user input for making the video/audio processing apparatus execute a command associated with the user input. The modular control components are interchangeable and replaceable by similar modular control components even during runtime of the control panel. A subset of the modular control components (203) has the same form factor, i.e. the outer dimensions of the modular control components (203) are the same. This design of the control panel enables a very flexible layout of the control panel without the need to produce a large number of variants of the control panel.

## Description

### Field

The present disclosure relates to a control panel for controlling a video/audio processing apparatus. In particular, the present disclosure relates to a control panel for controlling video/audio processing apparatus for broadcast productions. The present disclosure also relates to a modular control component adapted for being mounted into the control panel.

### Background

In today's live broadcast productions, such as TV productions, a variety of production equipment devices (video/audio processing apparatuses) is needed to produce output feeds including a program output feed for broadcast. A production server stores all source video/audio material such as camera feeds and audio feeds from microphones recorded in a studio. The production server also stores intermediate video/audio material such as clips that have been prepared by the operator or automatically by background processes running on the production server. A video/audio mixer (production mixer) enables inputting various video/audio materials and combining these video/audio materials into one or more output feeds. Most mixers are equipped with keyers and matte generators to perform keying operations and to generate background signals which are also called mattes. A graphics engine allows generating, combining and superimposing graphical elements into the video feeds. The production server also stores all final audio/video material such as the program output feed.

The mentioned and other functionalities are controlled by a production director entering commands into one or several control panels communicatively connected with the production equipment devices. The control panels include for instance a control panel for the vision mixer, an audio panel dedicated to control audio devices, a robotic camera panel, if there are robotic cameras in the studio, and a panel like the "life slow motion" (LSM) control panel made by EVS ® for controlling a production server to define clips, cue points or replay speeds and to enable browsing through a video. The mentioned control panels are only examples and those familiar with broadcast equipment are aware that other types of control panels may be present in a studio as well.

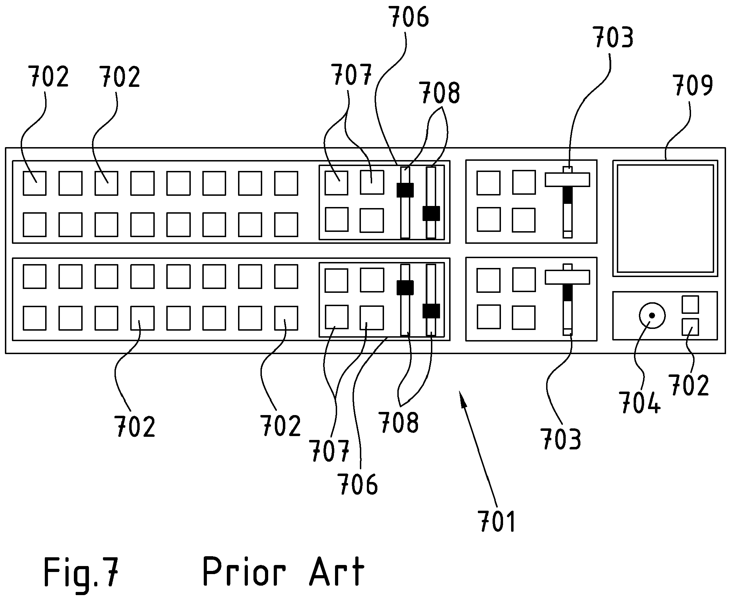

Fig. 7 shows a conventional control panel 701 with a plurality of different kinds of control elements. The control elements include buttons 702 initiating an action like selecting an input signal or keying an auxiliary signal into a main signal. The action associated with the button is triggered upon pressing down the button. Some buttons 702 have a kind of memory function indicating the state of the button. For instance, when the button 702 is pushed to launch an associated action it is illuminated as long as the action is performed. Alternatively, the illumination of the button changes its colour when the button is pushed. If the button is pushed again the illumination is terminated or the colour of its illumination changes back, respectively. In other embodiments the button indicates its state by a different position, e.g. if the associated action is performed the button remains in a lowered position while it returns into an elevated position when the button is pressed again. Most control panels 701 also include one or several T-bars 703 for setting variable parameters, e.g. a replay speed of a recorded video stream, or for indicating the status of an action associated with the T-bar 703 such as indicating by its position which one of two input signals is included in a program output signal. A jog dial 704 enables the user of the control panel to browse in a very intuitive way through a list of selectable items or through a video clip. The control panel shown in Fig. 7 includes two touch screens 706 showing button icons 707 and slider icons 708 as a replacement for physical buttons or sliders. In general, sliders are used to set various parameters in a production. The advantage of touch screens is that their design and functionality can be dynamically adapted by software. Finally, a display 709 provides visual feedback to the operator of the control panel 701.

Each broadcast production is different. So each broadcast production has a different number and a different type of actions to perform and parameters to define. Hence, each broadcast production would need a different number of control elements. Moreover, different operators have different preferences, and hence would prefer a different organization of these control elements on the control panel 701. However, it is practically and economically not realistic to manufacture dedicated control panels for each individual broadcast production, let alone for each individual operator.

In the prior art several methods have been adopted to personalize a control panel.

According to a first approach, a control panel is composed of several hardware components which are physically and communicatively connected with each other to form an integrated apparatus which under operational aspects is equivalent to a single control panel. Typically, the hardware components have a different layout, at least some of them. This approach is used today for reasons of scalability of the control panel and it permits a certain level of flexibility. Instead of designing n different control panels corresponding to n different sizes, a small number of control components are built. These components are combined to realize different sizes of control panels. Such type of control panel is known e.g. from US 9,489,055 of EVS Broadcast Equipment S.A.

However, once a control panel according to the first approach is put together its layout is fixed and the physical organization of the control elements cannot be adapted any more. As a consequence, the layout of a control panel of this type is geared towards a set of broadcast productions, but cannot be optimized for a specific broadcast production, let alone enable a personal layout according to the preferences of a production director.

A second approach builds on the possibility to program buttons and displays of the control panel. This implies that an action triggered by a specific button and the information rendered by a display depends on the specific context of the production. Nevertheless, the physical layout of a control panel according to the second approach remains to be fixed and cannot be personalized.

Taking this as a starting point the present disclosure suggests a control panel for a video/audio processing apparatus enabling enhanced flexibility with regard to the physical layout.

### Summary

In some embodiments the video/audio processing apparatus is composed of video/audio processing devices, for instance mixer, editor, replay, and character generator devices.

It is to be understood that in the context of the present disclosure the processing of the video signal also implies a corresponding processing of an accompanying audio signal and associated meta-data. The associated meta-data include among other video/audio meta-data or meta-data associated with the event that is captured, such as the speed of athletes or situational data being supplied by experts, e.g. commentaries on sports games like goals, fouls, etc. Only for the sake of better intelligibility of the description of the present disclosure audio signals and meta-data are not always mentioned in addition to the video signals.

According to a first aspect the present disclosure suggests a control panel for controlling a video/audio processing apparatus. The control panel comprises a set of modular control components detachably mounted in a housing of the control panel. Each modular control component comprises at least one control element. The at least one control element receives a user input for making the video/audio processing apparatus execute a command associated with the user input. The control panel further comprises a base module being electrically and communicatively connected with each modular control component for communicating data.

In an embodiment at least a subset of the modular control components has the same form factor. Advantageously, the modular control components are interchangeable and replaceable by similar modular control components. This design of the control panel enables a very flexible layout of the control panel without the need to produce a large number of variants of the control panel. Specifically, the control panel according to the present disclosure can easily be adapted to the needs of an individual operator or a specific sport or any other needs.

In a particularly advantageous embodiment the modular control components are adapted to be connected to and disconnected from the base module during active operation of the control panel. That means during the active use of the control panel in a broadcast production modular control components can be removed from the control panel and others can be inserted without interrupting the broadcast production.

In an embodiment of the control panel the base module comprises a power supply for providing electrical power to the modular control components.

The control panel may also comprise communication interfaces for exchanging data with at least one video/audio processing apparatus.

In an advantageous embodiment the user input is selectively assignable to a command to be executed. I.e. a control element may trigger different actions depending on which command has been assigned to it. This feature enhances flexibility even further. In a variant of this embodiment the selective assignment of the user input to a command to be executed is performed manually. In another variant of this embodiment the control panel is equipped with a processor executing an algorithm performing the selective assignment of the user input to a command to be executed. In this case it has been found useful when the algorithm is controlled by the context of a video production.

In a further embodiment of the control panel one of the modular control components comprises only a single control element. This embodiment enables a particular high degree of flexibility for the layout of the control panel. In one example the single control element is a T-bar or a jog dial.

According to the present disclosure the control elements are selected from the list containing button, T-bar, jog dial, touch screen, joy-stick and turn button. However, other types of control elements are not excluded.

In one embodiment the control panel is adapted for being connected with another control panel such that the connected control panels function like a single control panel. In this embodiment the control panel acts like an extension control panel for the other control panel that works as a main control panel. The extension control panel enables including additional modular control components, i.e. more modular control components than can be integrated in the main control panel. Obviously, this is particularly advantageous if for a broadcast production more modular control components are needed than can be integrated in the main control panel.

According to a second aspect the present disclosure suggests a modular control component which is adapted for removable mounting and electrical connection in a control panel according to the first aspect of the present disclosure.

According to a third aspect the present disclosure suggests a set composed of a control panel according to the first aspect of the present disclosure and a plurality of modular control components according to the second aspect of the present disclosure, which are configured to enable realizing a multitude of control panel layouts by combining different modular control components. The set forms a kind of toolkit with a limited number of modular control components that allows for realizing a large variety of different control panel layouts, tuned to different users and different productions, merely by combining, if needed even at runtime, different control modules. By including extension control panels it is possible to realize control panels of virtually any desired size and layout.

According to a fourth aspect the present disclosure suggests a method for performing a test procedure in the control panel according to any one of the preceding claims. The method comprises
- detecting connection of a modular control component with the base module;
- performing the test procedure upon connection of the modular control component with the base module; and
- issuing a warning message if the test procedure detects a defect in the connection between the control component and the base module and/or the modular control component itself. The advantage of this method is that a user of the control panel gets an immediate feedback if a newly included modular control component is ready for use.

Advantageously issuing a warning message may include displaying an alphanumeric message, turning on a control light and/or generating an audible signal.

### Brief Description of Drawings

Exemplary embodiments of the present disclosure are illustrated in the drawings and are explained in more detail in the following description. In the figures the same or similar elements are referenced with the same or similar reference signs. It shows:
- Fig. 1: hierarchical design of control panel according to the present disclosure;
- Figs. 2A-2C: perspective views of control panels according to the present disclosure;
- Figs. 3A-3E: individual modular control components of the control panel shown in Fig. 2;
- Fig. 4: a schematic diagram to illustrate the concept of the connections between the base module and the modular control components;
- Figs. 5A-5C: schematic illustrations of the mechanical fixation of the control modules in the control panel;
- Fig. 6: a flow diagram of a method according the present disclosure; and
- Fig. 7: a conventional control panel.

### Description of Embodiments

Reference herein to "one embodiment" or "an embodiment" means that a particular feature, structure, or characteristic described in connection with the embodiment can be included in at least one implementation of the disclosure. The appearances of the phrase "in one embodiment" in various places in the specification are not necessarily all referring to the same embodiment, nor are separate or alternative embodiments necessarily mutually exclusive of other embodiments.

While the disclosure may be susceptible to various modifications and alternative forms, specific embodiments have been shown by way of example in the drawings and will be described in detail herein. However, it should be understood that the disclosure is not intended to be limited to the particular forms disclosed.

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments described below comprise separate devices to facilitate the understanding of different functional group of the present disclosure. However, it is to be understood that some devices may very well be integrated in a single device.

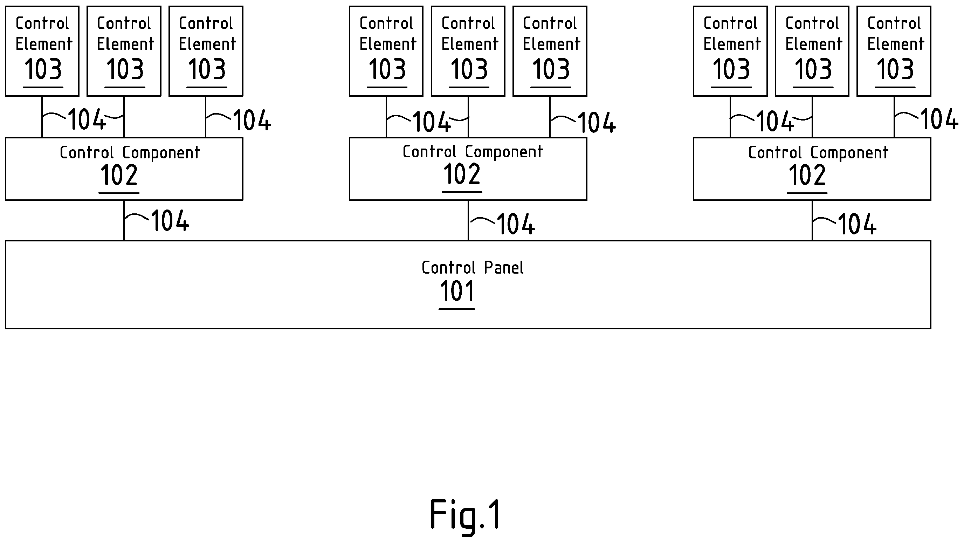

Fig. 1 shows a hierarchical design of a control panel according to present disclosure. As shown in Fig. 1 the control panel 101 is composed of control components 102. The control components 102 are composed of control elements 103. For illustrative purposes the control panel 101 shown in Fig. 1 is composed of three control components 102 and each control component 102 is composed of three control elements 103. However, it is to be understood that in other embodiments control panel 101 can be composed of fewer or more control components 102 and, similarly, each control component 102 can be composed of fewer or more control elements 103.

The layout of each control component 102 defines the assignment of the control elements 103 to the corresponding control component 102. Likewise the layout of the control panel 101 defines the assignment of the control components 102 in the control panel 101. The assignment of control elements 103 and control components 102 is to be understood as mechanical and electrical connections 104, which are symbolized in Fig. 1 by lines between control elements 103, control components 102 and the control panel 101, respectively. The connections 104 permit transmission of signals in both directions and supply voltages to the control components 102 and control elements 103.

The assignment of control elements and control components, respectively, can be changed by the user at any moment even during runtime of the production as it will be explained in greater detail below.

The hierarchical design of the control panel permits to define the number of control elements and control components to obtain a good balance between the number of different types of control components and layout flexibility. That means, with an increasing number of control elements 103 integrated into a single control component 102 also the number of different control components increases to achieve a flexible design and vice versa.

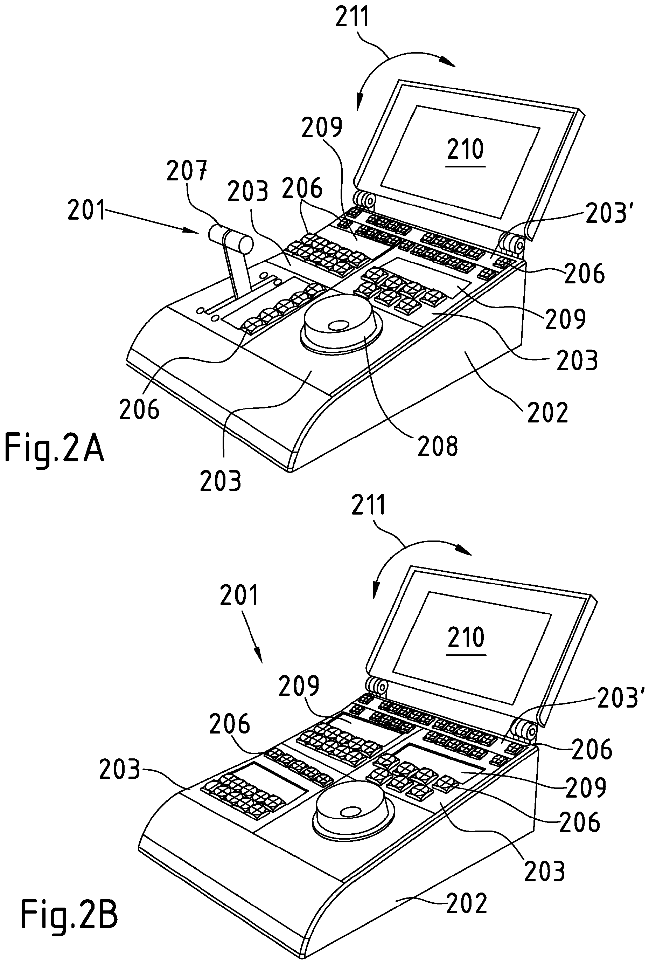

Fig. 2A shows a perspective view from the side and from the top of a first embodiment of a control panel 201 according to the present disclosure. The control panel 201 accommodates in a housing 202 five modular control components 203, 203'. Four modular control components 203 have the same form factor, i.e. their outer dimensions the same. The modular control component 203' has an elongated shape and, hence, a different form factor than the control components 203. Each modular control component is associated with control elements, such as buttons 206, a T-bar 207 and a jog-dial 208. The control panel 201 comprises a pivotable display 210 to indicate information to the operator of the control panel 201. Some of the modular control components 203 are provided with small displays 209 to indicate e.g. status information of an associated controlled device. The display 210 is pivotable in the direction indicated by arrow 211 and can be folded like a lid on top of the three modular control components 203, 203' neighbouring the display 210. When the display 210 is folded, the control panel 201 becomes very compact and can be transported easily.

Fig. 2B shows a second embodiment of the control panel 201 having a different layout; in particular the modular control component with the T-bar 207 has been replaced by another modular control component. It is noted that the modular control components 203 can be rearranged in every place even during runtime of broadcast production as it will be explained in greater detail further below.

For complex broadcast productions that need more control elements than can be accommodated in a single control panel 201, two or more control panels are linked or connected together to function like a single control panel. The linked control panels are named "extension control panels" in this case.

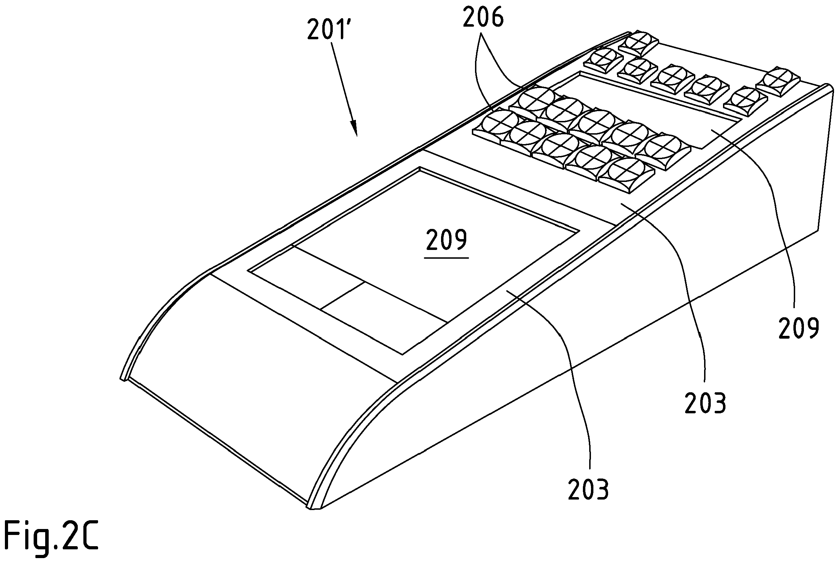

Fig. 2C shows an example of an extension control panel 201'comprising two modular control components 203. In case more than two additional modular control components 203 are required for a specific broadcast production a further extension control panel 201'can be connected. It is also noted that in other embodiments the extension control panel 201' contains only one modular control component 203 or more than two modular control components 203. In a setup with one main control panel 201 and at least one extension control panel 201' a specific modular control component 203 can be integrated in either the main or the extension control panel 201, 201'. In which panel the specific modular control component 203 is integrated is only a matter of preference of the operator but has no impact on the functionality of the specific modular control component 203.

Obviously, the extension control panel 201'addresses the problem that more modular control components 203 are needed for a broadcast production than can be integrated into a single control panel 201. However, in practice in some broadcast productions only one or two modular control components are needed. In order to provide also in such cases an adapted control panel 201 for the production director, so-called "dummy" modular control components are integrated in the control panel. The dummy modular control components simply provide a plain surface. In this way the production director cannot be distracted by control elements that are not used for the current broadcast production.

The embodiments shown in Figs. 2A to 2C are only exemplary and it is noted that in other embodiments of the present disclosure a control panel can be equipped with fewer or more modular control components. In some embodiments not all modular control modules have the same form factor.

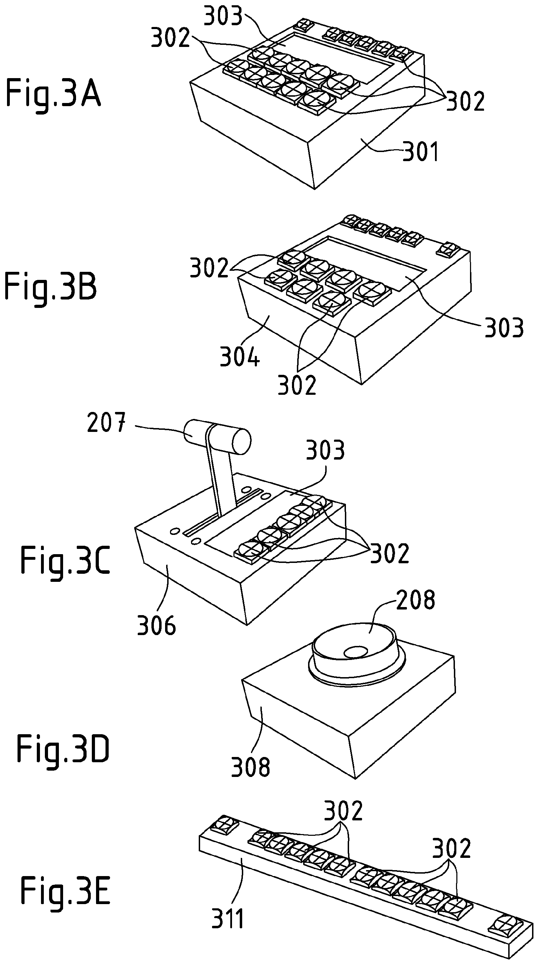

Figs. 3A to 3E show different kinds of modular control components.

In Fig. 3A modular control component 301 equipped with a plurality of buttons 302 is illustrated. The buttons 302 are used to initiate various kinds of actions performed by the video/audio processing apparatus, e.g. keying-in a text banner, switching signals etc. Depending on the embodiment all or some of the buttons 302 are illuminated buttons changing their colour to signal their state to the operator. Some or all buttons permit display of alphanumeric information on the button itself. In addition to that, the modular control component 301 is equipped with a display 303 to convey further status information to the operator not necessarily linked with the state of one of the buttons on the modular control component 301.

Fig. 3B shows another modular control component 304, which is similar to the one shown in Fig. 3A but exhibits a different layout of the control elements 302.

Fig. 3C shows a modular control component 306 is equipped with a plurality of buttons 302 in vertical alignment and a T-bar 207. A display is arranged between the T-bar 207 and the buttons 302 for providing status information and operational parameters to an operator.

In Fig. 3D the modular control component 308 is shown which is provided with a single control element only, namely a jog dial 208.

It is noted that the modular control components 301, 304, 306, and 308 have the same form factor, i.e. identical outer dimensions. This property enables a user to interchange the different types of modular control components at his discretion and to adapt the control panel to the needs of a specific production or to the preferences of the user. In this sense the layout of the control panel can be personalized. Nevertheless, the present disclosure encompasses also modular control components deviating from a common form factor.

Fig. 3E shows one example of such type of modular control component 311. The modular control component 311 has different outer dimensions than the modular control components 301, 304, 306, and 308 shown in Fig. 3A to 3D. The modular control component 311 has an elongated design with a row of buttons 302 arranged side by side. In some applications this layout can be advantageous for the operator or user.

The control elements (e.g. buttons 206, T-bar 207, jog dial 208 shown in Figs. 2A to 2C) are programmable or configurable. Hence, an action initiated by the actuation of control element is assignable by software and can change during the production. Likewise the visual feedback about the status of a control element can change, e.g. an illumination turns from red to green or programmable imprints on the control elements become visible and/or change as well as a visual feedback provided in the displays 209, 210 associated with the control elements, if applicable.

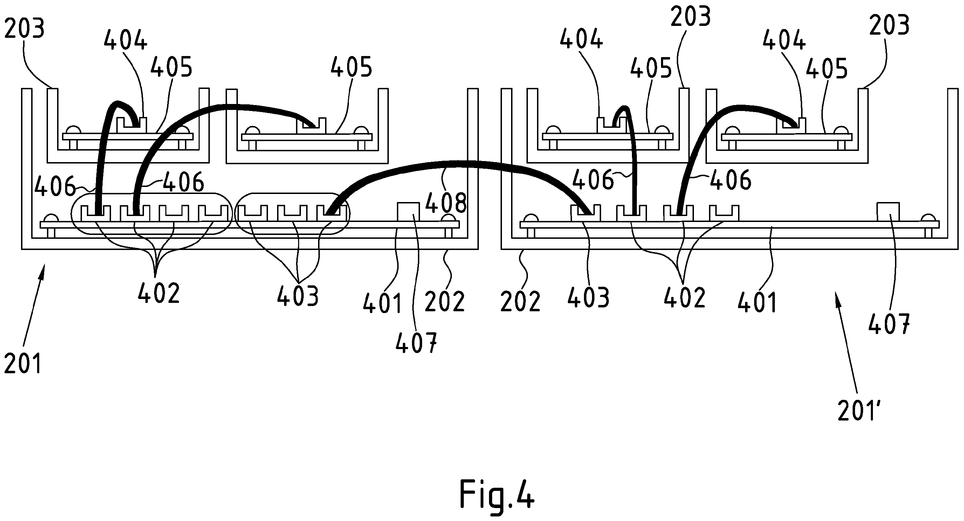

Fig. 4 illustrates the concept of the connections between a base module 401 shown as printed circuit board in the housing 202 of the control panel 201 and the control modules 203. The base module ensures communication of the control panel with production equipment that needs to be controlled, e.g. replay devices, routers editors etc. (not shown). One or more of the following communication means are foreseen: network based communication, serial communication, and USB based communication. The control panels 201, 201' are provided with corresponding interfaces enabling communication between the control panel and production equipment. The base module 401 orchestrates communication between the different control components, too.

The base module 401 is equipped with a plurality of internal connectors 402 and connectors 403 to extension control panels 201', one of which is shown in Fig. 4. Each modular control component 203 is provided with a connector 404 mounted on a printed circuit board 405 that also carries other electronic components of the modular control component 203. A cable 406 between each internal connector 402 of the base module 401 and the connector 404 of each control module establishes a connection for data communication and power supply purposes because the base module is equipped with a power supply 407 and ensures power distribution to all control components. A communication cable 408 connects the control panels 201, 201'.

In an alternative embodiment electrical contacts make direct contact between the modular control components and the base module. The contacts are identical and are located at the same position in all modular control components.

Either arrangement in conjunction with identical form factors of the modular control components enable that each modular control component can change its position in the housing or can be replaced by another modular control component 203. This can take place even during runtime of a live broadcast production. Therefore, the connections between the base module and the control components need to be "hot pluggable", i.e. the connection can be established and/or broken during the operation of the control panel. The communication between the modules is established automatically, a newly inserted control module announces itself and its capabilities to the base module upon which it can be used. One example for such a hot pluggable connection is a USB (universal serial bus) connection. Therefore, in one embodiment of the present disclosure the signal connection between the base module 401 and the modular control components 203 are USB connections. Specific measures are implemented to ensure that the connection between the USB is kept active at any moment, which is critical to guarantee the responsiveness of the control panel. A skilled person may conceive also other types of connections provided that these connections are also hot pluggable like a USB connection.

In any embodiment the communication between the modular control components and the base module is completely independent from the layout. For the base module the physical layout is completely irrelevant. The base module only "sees" a number of connected modular control components. The base module receives and sends information to the connected modular control components 203 and, thus, orchestrates the functionality of the control panel 201, while it delegates the handling of the control elements to the control components. The term "delegating" means that the base module of the control panel is not directly interacting with the control elements but only through the intermediary modular control components 203. Each modular control component 203 translates the actuations of control elements 204 and generates corresponding commands that are transmitted to the base module.

It is noted that even though all modular control components 203 communicate with the base module, the control components 203 do not directly communicate with each other. If signals are exchanged between modular control components the signals are passed via the base module 401. This concept advantageously avoids the need for electrical contacts between the modular control components. The absence of electrical contacts between the modular control components facilitates position changes and replacements of the modular control components.

The control elements (e.g. buttons 206, T-bar 207, jog dial 208 shown in Fig. 2) are programmable or configurable. Hence, an action initiated by the actuation of control element is assignable by software and can change during the production. Likewise the visual feedback about the status of a control element can change, e.g. an illumination turns from red to green or programmable imprints on the control elements become visible and/or change as well as a visual feedback provided in the display 210 associated with the control elements, if applicable.

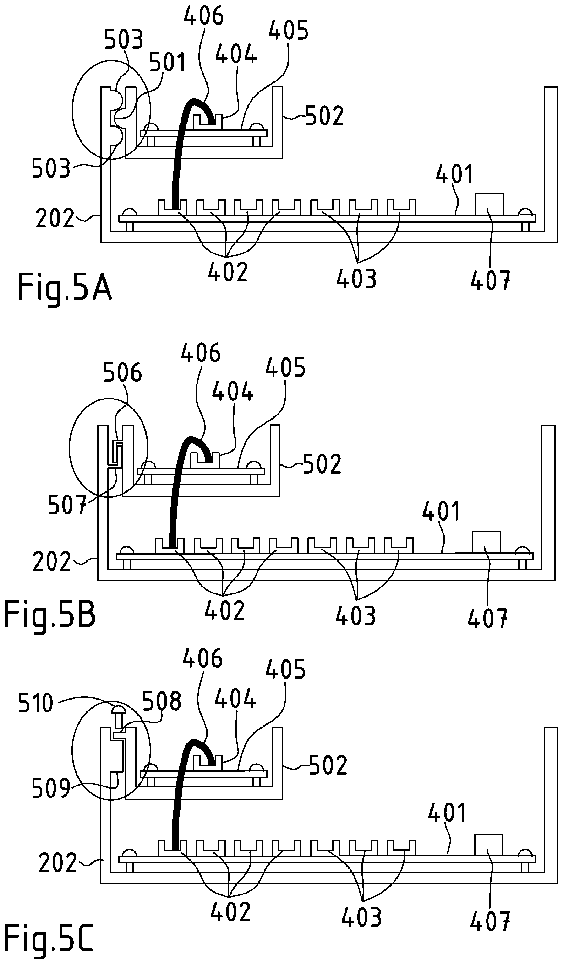

In Figs. 5A to 5C three different mechanical fixation means for mounting modular control components 203 in the housing of the control panel 201 are shown. All different fixation means provide a non-permanent and removable mounting. The modular control components are insertable into and removable from the housing 202 by a user, in particular by a manual intervention of the user.

Fig. 5A illustrates a kind of snap-in or clip-in fixation means. A protrusion 501 on the outside of housing 502 of the modular control component 203 engages with protrusions 503 provided on the inside of the housing 202 of control panel 201 to establish a removable mechanical connection between the modular control component 203 and the housing 202 of the control panel 201. The protrusions 501, 503 are only shown on one side of the housings but in other embodiments protrusions 501 are also provided on more sides of the housing 502 of the modular control component. In a variant of this embodiment the protrusion 501 engages with a corresponding recess in the housing 202. In another variant a protrusion 503 of the housing 202 engages with the corresponding recess in the housing 502 of the modular control component. In yet another variant a combination of the fixation means is used, e.g. the housing 502 is provided with protrusions 501 on its left and top side while on the opposite sides corresponding recesses are present. In this case the fixation means are engageable regardless of the position of the modular control component 203 in the housing 202 of the control panel 201. The orientation of the sides is to be understood such that in Fig. 5A the normal of the left side points to the left and the normal of the top side into the drawing plane. Other combinations of protrusions and recesses on other slides of the modular control component are easily conceivable by a skilled person.

Fig. 5B illustrates a different type of fixation means of the modular control component in the housing 202 of the control panel 201. The housing 502 of the modular control component is provided with a hook-shaped positioning anchor 506 that engages with a corresponding accommodation 507 connected at the housing 202.

Finally, in Fig. 5C the housing 501 of the modular control component is provided with lug 508 that rests on a bearing 509 fixedly connected with the housing 202. The lug 508 is provided with a through hole (not shown) such that a screw 510 can be screwed into a threaded opening (not shown) in the bearing 509.

Like it has been explained in connection with Fig. 5A a skilled person can conceive different variants for establishing a removable mechanical connection between the housing 502 and the housing 202.

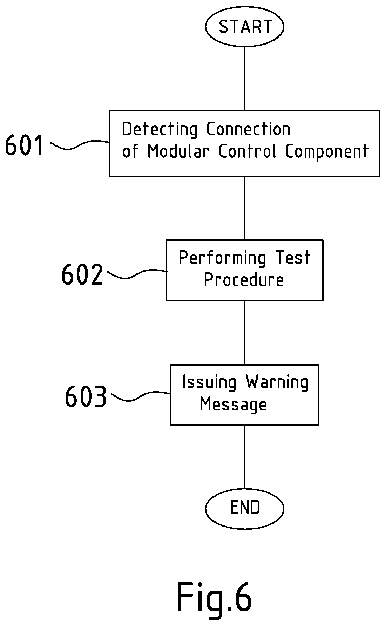

Every time a modular control component 203 is newly connected or reconnected, e.g. after having changed its position in the control panel, a process on the base module 401 performs a test procedure upon the establishment of the connection between the base module 401 and the modular control component 203. A flow diagram shown in Figure 6 illustrates the test procedure. When in step 601 the connection of a modular control component is detected then a test procedure is performed in step 602. If the test procedure detects a problem with the connection or the connected modular control component 203 itself, a warning message is issued in step 603. The warning message can be as simple as a red control light indicating that there is some kind of problem in contrast to a green control light, which is normally on and indicates that the modular control component is properly connected and operative. In a more sophisticated embodiment a processor issues the warning message as alphanumeric data to a character generator connected with the control panel 201 so that the warning message eventually becomes displayed as an alphanumeric warning message on one of the screens in the studio.

As described so far the control panel 201 according to the present disclosure possesses a high degree of flexibility even including a runtime variable layout, i.e. the physical composition of the control panel can change during runtime which brings about changes with regard to the control elements. Changing the physical composition includes that the modular control components 203 change their position on the control panel 201 and one or several control components currently integrated in the control panel 201 are replaced by other modular control components 203 which were not integrated in the control panel 201 at the beginning. Hence, a broadcast production may start with a first composition and layout of the control panel 201 which dynamically changes during the broadcast production such that the broadcast production is terminated with a second and different composition and layout of the control panel 201. Between the first and the second layout the control panel 201 can take on further layouts and compositions, if appropriate. In some broadcast productions having different parts requiring different kinds of interventions from the production director the flexible layout of the control panel is advantageous. The flexible layout offers the production director a control panel which is adaptable to the needs of the moment.

In an alternative approach a flexible layout of the control panel 201 is achievable by using a touch screen, the layout of which is programmable. Because of the flexibility offered by touch screens modular control components of the present disclosure are equipped with a touch screen. However, a touch screen does not provide the same physical user experience in the sense of touch and feel like physical buttons to an operator. As a matter of fact, the physical user experience is important for broadcast productions. This limitation of a touch screen with regard to user experience can be overcome by mechanical overlay devices, which are placed on top of the touch screen implementing transparent buttons. The functionality of the button is implemented by the touch screen but the physical user experience is determined by the mechanical overlay on top of the touchscreen. In a similar way a mechanical disk can be placed on a touch screen to replace a physical jog dial.

This approach nevertheless has some limitations. Firstly, the layout of the mechanical overlay is fixed and cannot be changed during the production. It is only possible to reassign the associated functionality of the buttons by programming corresponding changes on the touchscreen. Secondly, mechanical disks that are put on a touch screen to replace a real jog dial do not provide the mechanical rotational resistance of a real jog dial. It has to be kept in mind that jog dials for professional applications even provide a contextual mechanical rotational resistance. Thirdly, there is no appropriate replacement for a physical T-bar.

In summary, the present disclosure suggests a control panel providing a flexible layout by integrating different modular control components including control components having only a single control element. In addition to that, some control components include a touch screen and are capable of changing its functionality by software.

### Reference Signs List

- 101: control panel
- 507: accommodation
- 102: control component
- 508: lug
- 103: control element
- 509: bearing
- 104: connection
- 510: screw
- 201, 201': control panel
- 601-603: method steps
- 202: housing
- 701: control panel
- 203, 203': modular control component
- 702: button
- 206: button
- 703: T-bar
- 207: T-bar
- 704: jog dial
- 208: jog dial
- 706: touch screen
- 210: display
- 707: button icon
- 211: arrow
- 708: slider icon
- 301: modular control component
- 709: display
- 302: button
- 303: display
- 304, 306, 308, 311: modular control component
- 401: base module
- 402: internal connectors
- 403: connectors
- 404: connector
- 405: PCB
- 406: cable
- 407: power supply
- 408: cable
- 501: protrusion
- 502: housing
- 503: protrusion
- 506: anchor

## Claims

1. Control panel for controlling a video/audio processing apparatus comprising a set of modular control components (203) detachably mounted in a housing (202) of the control panel (201), wherein each modular control component (203) comprises at least one control element (206, 207, 208), wherein the at least one control element receives a user input for making the video/audio processing apparatus execute a command associated with the user input, wherein the control panel (201) further comprises a base module (401) being electrically and communicatively connected with each modular control component (203) for communicating data.

2. Control panel according to claim 1, wherein at least a subset of the modular control components (203) have the same form factor.

3. Control panel according to claims 1 or 2, wherein the modular control components (203) are adapted to be connected to and disconnected from the base module (401) during active operation of the control panel (201).

4. Control panel according to one of the preceding claims, wherein the base module comprises a power supply (408) for providing electrical power to the modular control components (203).

5. Control panel according to one of the preceding claims, wherein the control panel (201) comprises communication interfaces for exchanging data with the video/audio processing apparatus.

6. Control panel according to one of the preceding claims, wherein the user input is selectively assignable to a command to be executed.

7. Control panel according to claim 6, wherein the selective assignment of the user input to a command to be executed is performed manually.

8. Control panel according to claim 6, wherein the control panel (201) is equipped with a processor executing an algorithm performing the selective assignment of the user input to a command to be executed.

9. Control panel according to claim 8, wherein the algorithm is controlled by the context of a video production.

10. Control panel according to one of the preceding claims, wherein one of the control components (308) comprises only a single control element (208):

11. Control panel according to one of the preceding claims, wherein the control elements include at least one control element contained in the list of button (206), T-bar (207), jog dial (208), touch screen, joy-stick and turn button.

12. Control panel according to one of the preceding claims, wherein the control panel (201') is adapted for being connected with another control panel (201) such that the connected control panels (201, 201') function like a single control panel.

13. Modular control component adapted for removable mounting and electrical connection in a control panel (201, 201') according to one of the proceeding claims.

14. Set composed of a control panel (201, 201') according to one of claims 1 to 12 and a plurality of modular control components (203) according to claim 13, which are configured to enable realizing a multitude of control panel layouts by combining different modular control components.

15. Method for performing a test procedure in the control panel according to any one of the preceding claims, the method comprising
- detecting connection (601) of a modular control component (203) with the base module (401);
- performing the test procedure (602) upon connection of the modular control component (203) with the base module (401); and
- issuing a warning message (603) if the test procedure detects a defect in the connection between the control component (203) and the base module (401) and/or the modular control component (203) itself.

16. Method according to claim 15, wherein issuing a warning message includes displaying an alphanumeric message, turning on the control light and/or generating an audible signal.
